# EUROPEAN PATENT SPECIFICATION

(11) **EP 1 772 037 B1**
(45) Date of publication and mention of the grant of the patent: **17.09.2014**
(21) Application number: 05753923.1
(22) Date of filing: 23.06.2005
(51) Int. Cl.: H04W 64/00

(54) **DETERMINATION OF MOBILE TERMINAL POSITION**
BESTIMMUNG EINER MOBILGERÄTEPOSITION
DETERMINATION DE LA POSITION D'UN TERMINAL MOBILE

(30) Priority: 16.07.2004 SE 0401895
(43) Date of publication of application: 11.04.2007
(73) Proprietor: Telefonaktiebolaget LM Ericsson (Publ), 164 83 Stockholm (SE)
(72) Inventor: BOLIN, Johan, S-756 43 Uppsala (SE); KANGAS, Ari, S-181 30, Lidingö (SE)
(74) Representative: Egrelius, Fredrik
(86) International application number: PCT/SE2005/001003
(87) International publication number: WO 2006/009497

(56) References cited:
- WO-A1-02/085057
- US-A- 5 390 339
- US-A1- 2003 008 664
- US-B1- 6 282 427
- US-B1- 6 295 455

## Description

### TECHNICAL FIELD

The present invention relates in general to cellular communications systems and in particular to determination of positions of mobile terminals connected to cellular telecommunications systems.

### BACKGROUND

The possibility to determine the position of a mobile device has enabled application developers and wireless network operators to provide location based, and location aware, services. Examples of those are guiding systems, shopping assistance, friend finder and other information services giving the mobile user information about their surroundings.

In addition to the commercial services, the governments in several countries have also put requirements on the network operators to be able to determine the position of an emergency call. For instance, the governmental requirements in USA (FCC E911) requires that it must be possible to determine the position of a certain percentage of all emergency calls. There is no difference between the requirements put on indoor environments compared to outdoor environments.

In outdoor environments, the position estimation can be done using external methods for position determination, e.g. GPS (Global Positioning System) based methods like Assisted-GPS (A-GPS). Position estimation can also be performed using the wireless network itself. Methods using the wireless network can be grouped in two main groups. The first group comprises methods that are based on the radio cell, to which a mobile terminal is attached, e.g. by using Cell-ID. The second group uses measuring of radio signals from several base stations (BS) and determining the terminal position using e.g. Time Difference (TD).

In order to be able to connect to a mobile network or to perform handover when connected, a mobile terminal typically constantly measures available downlink signals, not only from its own base station, but also from other base stations. These signals are typically control signals intended for measuring radio conditions of transmissions, which control signals contain, among other data, information about how to establish a connection to the transmitting base station. In particular, the control signals comprise data, which by itself or in combination with the frequency of the carrier on which the control signal was transmitted constitute base station identification data. A mobile terminal can thus obtain an identity of the transmitting base station and an estimate of the radio conditions. The mobile terminal typically compiles this information, in GSM (Global System for Mobile communications) in a neighbour list, which is transferred to the network as information.

Position estimation can be based on measurements in the neighbouring list. One then uses the relation between the distance from the radio base station and the radio condition in combination with knowledge about the exact position of the base station. The base station positions are known within the communications network. This means that the neighbour list easily can be used for position estimating according to different algorithms. The accuracy of the position estimation is generally proportional to the size of the cell.

Triangulations, or Time Difference (TD) methods, use signals associated with two or more different base stations. These signals are used to calculate the position or at what distance from the base station a mobile terminal is located. The calculations are based on the relative or absolute difference in the time it takes the signal to propagate between the different base stations and the terminal. The achievable accuracy of TD-methods depends on system architecture, physical conditions and radio conditions. Typically, the accuracy of a TD method in a mobile telephony system is 50 to 150 meters. TD methods are also relatively time and resource consuming. An example of positioning based on time measurements is disclosed in e.g. US 6,295,455. Fingerprinting methods use the fact that all places have a, more or less, unique characteristic signature of the received radio signals. This is the result of multi-pathing and reflections in the buildings and obstacles. By storing the characteristic radio signature of different locations in a database, it is possible to determine the location of a device by comparing the received signature of a signal with the signatures stored in the database. Fingerprinting methods requires an always-updated database. A good result typically also relies on being able to match signals from several different sources or base stations.

A terminal located indoor typically has a connection to a base station covering the surrounding outdoor area that is of lower quality than if the terminal would have been located outdoors. To improve the indoor coverage situation, many larger buildings are equipped with indoor mobile telephony systems. The indoor system most often consists of one base station and a distributed antenna system or a leaking cable antenna. For a building spread over large areas repeaters may also be used. This results in that the entire building appears as one large radio cell and that it is impossible to determine where the terminal is located within the building. Furthermore, due to weak signals from base stations located outdoors, more sophisticated methods using e.g. triangulation is normally impossible to apply to indoor positioning.

One straightforward solution is to use an additional system for positioning, a system that is not based on any mobile telephony system. This can be an indoor GPS system, a WLAN (Wireless Local Area Network) or a Bluetooth based system or some other sensor solution. However, such systems require additional complex equipment and also the terminals have to be equipped with special hardware and/or software, which makes the solution expensive.

Another straightforward solution is to increase the number of indoor base stations, thus reducing the size of the cells. However, a base station is an expensive piece of equipment and such a solution would therefore become very costly. A drastic increase at base station level also means that network control and truncating capabilities also have to be extended, which also is associated with large costs.

In the published US patent application US 2003/0008664 A1, a method and apparatus for estimating the position of a terminal within a radio system having a repeater is disclosed. A dedicated identity code is transmitted for each repeater. The terminal is provided with hardware and/or software for receiving and interpreting these codes. In a preferred embodiment of a CDMA system, the identification codes can be implemented with pseudo-noise sequences at defined offsets, specifically reserved for repeater identification. The repeater identity can then be used to give improved position estimation. Such a solution has the drawback that it typically needs additional software in the terminals for being able to identify the dedicated identity codes as well as additions in different communications standards, even if some special solutions may be possible within existing frames of standards.

In the published International Patent Application WO 02/085057 A1, a location method and a location system for locating a wireless terminal device in a cellular network are disclosed. At least two spatially diverse local measurement units are arranged at a local determination unit and adapted to receive a signal from the wireless terminal device. Measurement signals received from the local measurement units are processed at the local determination unit to obtain a location information of the terminal device to be transmitted to a location centre of the cellular network. The location information may be a time difference of arrival value or a location estimate. A location can be provided in specific areas, such as indoor environments. Network signalling load is reduced and clock synchronization between location measurement units is no longer required, due to the fact that the location information is directly generated at the local location measurement units.

### SUMMARY

In prior art solutions, an improved accuracy in position estimation is associated with large investments in expensive additional equipment. Furthermore, some solutions require that special hardware or software is added to the mobile terminals, which means that all terminals already on the market either will not be possible to position, or that they must be upgraded. Moreover, solutions operable within present or near future standards are to prefer.

An object of the present invention is thus to provide for position estimation of mobile terminals with improved accuracy that involves limited investments in additional equipment. A further object of certain embodiments of the present invention is to provide methods and devices that do not require any changes in existing cellular standards and with no need for new or updated mobile terminals. Another object of certain embodiments of the present invention is to provide for improved position estimation suitable to be comprised in systems involving distributed antenna systems, leaking cable antennas and/or systems comprising repeaters. Yet another object of certain embodiments of the present invention is to provide for improved position estimation of indoor systems.

The above objects are achieved by devices and methods according to the enclosed patent claims. In general words, a multitude of measurement units is distributed over a cell area. The measurements units are instructed to measure properties of uplink signals of radio resources utilised by mobile terminals, whose position is requested. The measurements are based on at least signal strength measures. The measurements are provided to a position determination node, which by comparing the measurements can estimate a position of the mobile terminal. Several possibilities for implementing ordering and reporting routines as well as implementing the communication between the measurement units and the position determination node are provided. The measurement units comprise two communication interfaces, one arranged for measuring the signal strength and one for communicating with the position determination node. The measurement units prepare measurements reports on the achieved measured properties, which are transmitted to the central position determination node for final evaluation. The communication interface for communicating with the position determination node is arranged to utilise the radio interface of the cellular communications system associated with the cell, occupying radio resources that otherwise could be used for ordinary traffic within the cell

The present invention has many advantages compared to prior art solutions. Since the present invention makes use of already existing uplink signalling, the proposed embodiments are easy and inexpensive to introduce in already existing systems. The complexity of additional functionality or devices is low. Furthermore, mobile terminals already on the market can be used with the proposed system without any modifications at all.

### BRIEF DESCRIPTION OF THE DRAWINGS

The invention, together with further objects and advantages thereof, may best be understood by making reference to the following description taken together with the accompanying drawings, in which:
FIG. 1 is a schematic illustration of a cellular communications system;
FIG. 2 is a schematic illustration of a distributed antenna system according to prior art;
FIG. 3 is an illustration of an example of a communications system;
FIG. 4 is an illustration of an embodiment of a communications system according to the present invention;
FIG. 5 is an illustration of another example of a communications system;
FIG. 6 is an illustration of an embodiment of a communications system according to the present invention having an antenna system involving a repeater;
FIG. 7 is an illustration of an embodiment of a communications system according to the present invention having an additional coarse positioning arrangement;
FIGS. 8A-B are illustrations of examples of connection possibilities of measurement units;
FIG. 8C is an illustration of an embodiment of connection possibilities of measurement units according to the present invention;
FIG. 9 is a flow diagram of main steps of an embodiment of a method according to the present invention;
FIG. 10 is a block diagram of an embodiment of a measurement unit according to the present invention; and
FIG. 11 is a block diagram of an embodiment of a position determination node according to the present invention.

### DETAILED DESCRIPTION

In order to fully understand the operation of the present invention, first a short review of general prior art position estimations in cellular networks is given.

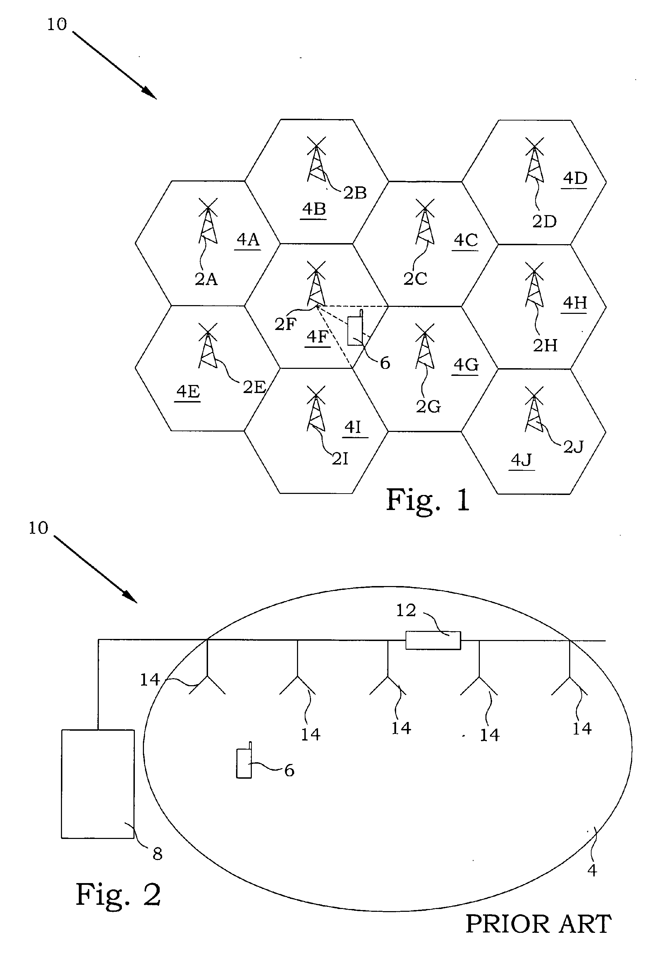

The basic idea with cellular networks 10, one of which is schematically illustrated in Fig. 1, is to structure the network as a grid of cells 4A-J where each cell 4A-J is the area covered by one radio base station 2A-J. The communication takes place via different radio resources. To avoid interference between mobile phones 6 and radio base stations 2A-J in neighbouring cells, the communication between the mobile phone 6 and the base station 2A-J uses different resources, i.e. slightly different configurations or settings, e.g. of frequencies or codes. The number of those resources or "configurations" is limited. In GSM systems, the resources are formed by a limited number of allowed carrier frequencies, and they are used to separate communication in different cells. In WCDMA (Wideband Code Division Multiple Access) systems, the resources are characterised by a limited number of different codes. The result of the limited number of radio resources means that it is important to plan the network 10 carefully.

Mobile Station (MS), Mobile Phone, Mobile Terminal and Handset all refer to the device that is to be positioned. These terms will be used in the present disclosure as equivalent expressions. This device is typically a mobile telephone, hand held computer so-called Personal Digital Assistance (PDA) or other device or apparatus equipped with a radio receiver for cellular or mobile networks.

In most cellular networks 10, the mobile terminal 6 continuously measures the receiving conditions of the downlink radio signals. The reasons are several. One is to be able to modify the transmission power in order to avoid sending at unnecessary high transmission power. In general, but not necessarily, the radio base station with the best radio conditions is the one used for connecting to the cellular network. The base station with the best radio conditions is in most cases also the one that is located closest to the mobile telephone 6. In Fig. 1, the mobile telephone 6 is connected via base station 2F. The mobile telephone 6 is thus located within the cell 4F of that particular base station 2F. The radio cell is defined as the area surrounding a base station, in which the base station is the base station with the best radio connection to a mobile telephone. Since the positions of the transmission points associated with the base stations are known by the cellular network, the identity of the base station with the best radio conditions hence also gives an approximate location estimate of the mobile telephone. The size of a cell is proportional to the density of base stations. In Fig. 1, one may therefore conclude that mobile telephone 6 is present within cell 4F.

In order to know which base station to connect to, the mobile telephones constantly measures downlink signals sent also from other base stations. These signals are special control signals intended for measuring the radio conditions between the base stations and the mobile telephone. The signals contain, among other data, information about how to establish a connection to the base station sending the signal. As mentioned above, the communications in neighbouring cells are done over links with slightly different configurations in order to avoid interference. The control signals are typically transmitted using those different configurations. As an example, in GSM, the control signal from one base station is sent on a different frequency than the control signal sent from the neighbouring base station. However, base stations further away could use the same frequency in a reuse pattern. To be able to separate the base stations associated with different cells, but that are sending control signals on the same frequency, from each other, the control signals also contain other information making is possible to distinguish a control signal from one base station from the other. This information, alone or in combination with the frequency of the control signal, gives a possibility to identify a particular base station. In other words, the control signals comprise base station identification data. In GSM, so-called colour codes are used to separate different base stations from each other.

In the present disclosure, the expressions "position" and "location" will be used. Position is intended to mean a geographical position given as coordinates or degrees (e.g. the WGS-84 datum). It may also contain orientation and/or heading, speed, acceleration etc. A position may also be given as a relative measure. The location is a more subjective position defined by the type of (or relation to) facility or place. Examples of locations are: "military area/facility", "hospital", "office", "theatre", "near emergency exit". The expression "location" is assumed to comprise also what is comprised by "position".

The most trivial position estimation is to determine the approximate position as inside the cell of the base station with best radio connection with the mobile terminal. In Fig. 1, this means that it is possible to conclude with a certain probability that the mobile telephone 6 is situated within cell 4F. Using several measured signals from different base stations for different algorithms means that a better accuracy than the cell where the mobile phone is camping can be calculated. In Fig. 1, it is assumed that base station 2G provides the second best downlink signal. It is then very probable that the mobile telephone is situated in a 60° sector facing the cell 4G, marked with broken lines in Fig. 1. Furthermore, if assuming that base station 2I is the next in quality, it is also probable that the mobile terminal 6 is situated in the half of the sector that is closest to cell 4I.

The translation or calculation translating the downlink signal measurements to a position and/or location estimate may take place either in the cellular system or in the terminal. If the position estimation takes place in the system, e.g. in a network server, the mobile terminal has to transmit measurements to the radio base station. If the mobile terminal itself performs the estimation, the estimation can in a basic concept e.g. comprise a determination of a closest base station in form of e.g. a cell-ID. Such position information can in certain cases be enough to support many of the services based on position determination. However, if the actual geographic position is to be estimated, the mobile terminal first needs information about the particular surroundings. Such information should contain at least the known positions of the different base stations and could e.g. be deduced from instructions concerning base stations to be measured. Other information that may be specific to the location, building or surroundings may also be useful. Such specific information about e.g. a specific building could comprise map information, from which it is possible to exclude certain areas where a mobile cannot be located from the position determination. It is e.g. obviously most likely that a mobile terminal is not located inside a wall of the building or hovering in the air 10 metres above the floor.

Indoor coverage in cellular systems is often of a lower quality than outdoors. Therefore, many larger buildings have their own local cell or cells. A typical prior art system is illustrated in Fig. 2. One single base station 8 serves a distributed antenna system comprising a number of antennas 14 distributed over the indoor area. A repeater 12 can be present in order to enhance the signals during distribution. Since all antennas provides the same information, a mobile terminal 6 experiences all antennas 14 together as one transmitting system, being associated with one single cell 4. Furthermore, since the mobile terminal 6 is unaware of which antenna it is communicating with, refined position estimation as described above is less likely to operate well.

In the present invention distributed antenna systems as well as leaking cable systems and subsystems that are fed by a repeater or any other active component are assumed to be well suited for implementing certain embodiments of the present invention. The term "antenna" is normally used both for an antenna in a distributed antenna system, but also for a section of a leaking cable on a leaking cable antenna.

The typically bad connections to the base stations for the outdoor coverage also makes it difficult or even impossible to use base stations located outdoors for triangulation purposes. Since only one base station often is used for the indoor coverage, it is impossible to use internal indoor triangulation for position determination. In some buildings that are spread over large areas (e.g. airports), repeaters are used. The cell then becomes even larger resulting in that the area in which the mobile phone is when connected to that cell is very large, i.e. the position estimation accuracy is low.

The accuracy of position estimation based on downlink signal measurements is basically proportional to the cell size. Smaller cells will generally give a better position estimation. However, cells are controlled by a base station, and base stations are generally very expensive.

The present invention is applicable to most cellular communications networks. The accuracy of the position determination method according to the invention depends on e.g. the premises or environment where the invention is to be implemented and other pre-requisites as well as various customer requirements. However, a position accuracy of 20-50 meters is believed to be realistic. The present invention could advantageously be used for positioning of mobile terminals located in indoor systems, underground railway systems (subways) and sub-systems connected to cellular macro systems, e.g. tunnels connected to a macro radio cell using a repeater.

The positioning method disclosed in the examples below is primarily targeting positioning in cellular mobile radio systems. GSM is the mobile radiotelephony standard used in the exemplary embodiments presented in this disclosure. However, the present invention is also applicable to other cellular mobile radio systems and their related standards, such as e.g. other radio standards based on TDMA (Time Division Multiple Access), CDMA (Code Division Multiple Access), Wideband CDMA (WCDMA), PDC (Personal Digital Cellular) and TDD (Time Division Duplex) technology.

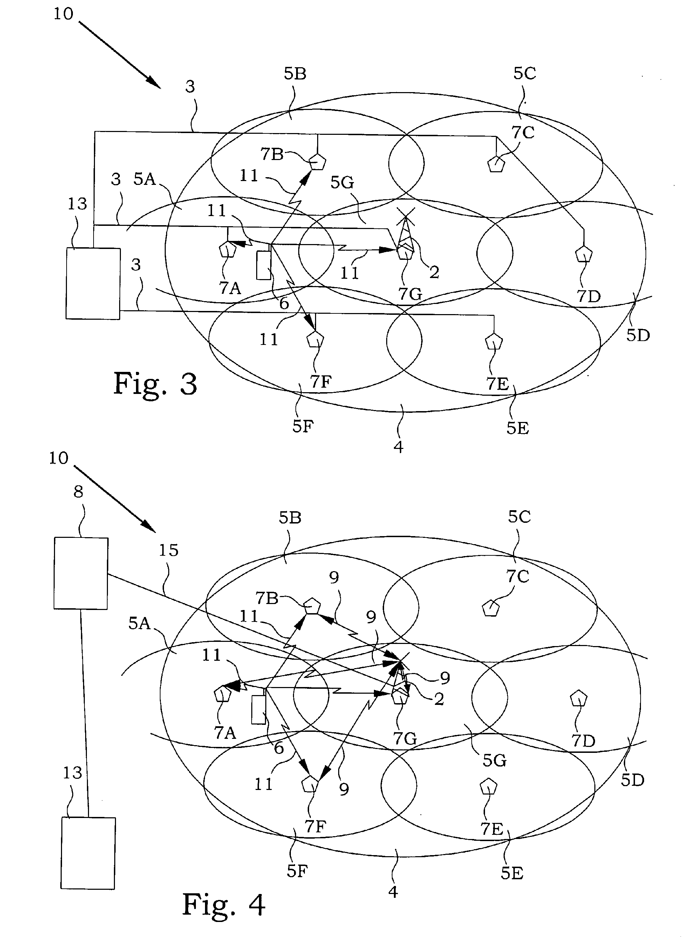

Fig. 3 illustrates schematically an example of a communications system. A base station 2 is associated with a cell 4. A mobile terminal 6 is situated within the cell 4. A multitude of measuring units 7A-G are distributed over the cell area. The measuring units 7A-G are connected, in this particular example by wires 3, to a position determination node 13. The communication via the wires 3 can be performed by any wired based communication technology, e.g. regular telephone lines, ISDN, Ethernet etc. When the mobile terminal 6 wants to have its position determined by an accuracy better than the cell division, the position determination node 13 demands the measuring unit 7A-G to measure a property of a signal 11 of an uplink radio resource allocated to the mobile terminal 6 in question. The signal property is in one embodiment associated with signal strength and can e.g. be an absolute signal strength, or a signal-to-noise ratio measure. The measurements are typically compiled in the measuring units, typically involving repeated measurements over a short period of time to insure relatively accurate values. These compiled measurement values are then communicated to the position determination node 13, where a comparison is made.

In one embodiment, the position determination node 13 is arranged just to compare the different values, and the mobile terminal 6 is determined to be present within an area 5A-5F closest to the measuring unit 7A-G having the highest measured signal property value. In the situation illustrated in Fig. 3, the measuring unit 7A is probably measuring the highest signal strength, and a first position determination of the mobile terminal 6 is that the mobile terminal 6 is present within area 5A.

In another embodiment, the position determination can be further refined. Again referring to Fig. 3, it can be concluded that the signal strength measurements of measuring units 7B, 7F and 7G probably are in the same order of magnitude, which means that the mobile terminal probably is present at about the same distance from measuring units 7B, 7F and 7G, but still within area 5A. However, since signal strength properties can be influenced in many ways, the accuracy of such refined position determinations is generally not very impressive. Instead, to improve the position accuracy, the density of measuring units can be increased, which reduces the size of the associated areas 5A-G.

Signal strength can be measured easily by many procedures as such known in prior art. A probe measuring signal power is typically easy to implement and is typically associated with low costs. Furthermore, by having a multitude of measuring units relatively close to the mobile terminal, the sensitivity of the signal strength of e.g. obstructing elements is generally relatively low. The reason for this is to be found in the exponential power distribution of the radio signal. In the vicinity of an emitting antenna, the gradient of the power distribution is much steeper than further away from the emitting antenna. Therefore, a decreased signal by e.g. 10 dB, caused by an obstructing element, will result in a large spatial error when the receiver is located a large distance from the emitter. A corresponding spatial error will be considerably smaller if the receiver is located closer to the emitter. A signal-to-noise ratio measure is believed to present an even lower sensitivity for obstructing objects.

It should be noted that the measurement units 7A-G are measuring on uplink signals 11 used by the mobile terminal 6. There is thus no need for any additional hardware or software in the mobile terminal 6. The only requirement is that the position determination node 13 should have access to the actual radio resource that is used for the uplink signals of the mobile terminal 6 to be positioned. Furthermore, since already available uplink signals are used for the positioning measurements, the interference situation is unaltered. Solutions based on providing additional signals in the licensed spectrum require a license. Regulations for licensed spectra differ from one country to another and general solutions may be difficult to find. This typically means that only operators having licenses can provide such solutions to the users. By instead using only measurements on already existing signals, no licensing is necessary and external operators may therefore easily be involved. Fig. 4 illustrates schematically a particular embodiment of a communications system according to the present invention. The base station 2 is connected by a connection 15 to a base station controller or radio network controller 16. (This was of course also the case in Fig. 3, however not explicitly illustrated.) Also here, measurement units 7A-G are distributed over the cell area 4. In this particular embodiment, the position determination node 13 is connected to the base station controller 16. In another embodiment, the position determination node 13 can even be comprised in the base station controller 16. The communication between the position determination node 13 and the measurement units 7A-G utilises in this embodiment the resources of the communications system itself. That is, the measurement units 7A-G communicates on radio resources 9 with the base station 2, which forwards the information to the base station controller 16 and the position determination node 13. The communication between the measurement units 7A-G and the position determination node 13 can be provided by control signalling or by including reports and orders in ordinary data packets transmitted over the user plane, or a combination thereof.

In this embodiment, the measurement unit 7A-G will occupy some radio resources of the communications system 10 that otherwise could be used for ordinary traffic. However, if the number of measurement units that are active at the same time is relatively limited, and furthermore if the measurement units could share some radio resources, the impact on the amount of available radio resources could be kept small. The large portion of the communication will consist of the actual measurement results and are sent in an uplink direction, where there typically are more available radio resources. The downlink communication consists of measurement orders, which should be possible to send as a multicast or broadcast message to the measurement units. The advantage of this particular embodiment is that no additional wiring or separate communications system for the measurement units 7A-G is needed, which reduces the installation costs significantly. Furthermore, the measurement units 7A-G could be based on the same hardware and software as ordinary mobile phones, which opens up for very low-cost solutions.

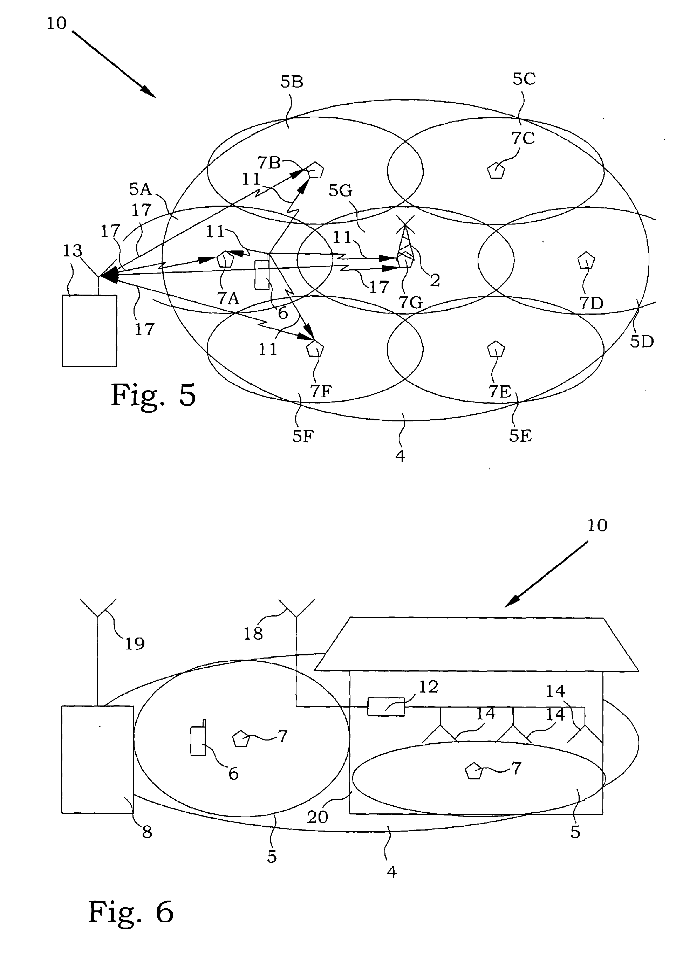

Fig. 5 illustrates another example of a communications system according to the present invention. The measurement units 7A-G are in this example equipped for allowing a wireless communication 17 with the position determination node 13. This wireless communication is separate from the main communications system and can be based on any wireless communication technology, e.g. Bluetooth, wireless LAN (such as e.g. according to the standards 802.11b and 802.11g), GPRS, UMTS etc. In this example, no resources of the main communications system are occupied, however, the installation of the additional wireless communications system increase the costs for such a solution.

Fig. 6 illustrates a particular embodiment of the present invention applied to a cell using a repeater arrangement. A base station 8 has an antenna 19 for the outdoor part of the cell 4. A repeater based implementation is here suitable, since it makes it possible to determine if a mobile phone using the base station is located inside a building 20 or not. A receiver 18 receives the signal and a repeater 12 feeds an indoor system of e.g. distributed antennas 14. A measurement unit 7 is provided within the building and another measurement unit 7 is provided outside the building. From the measurements, it can easily be determined if the mobile terminal 6 is situated within the building 20 or not.

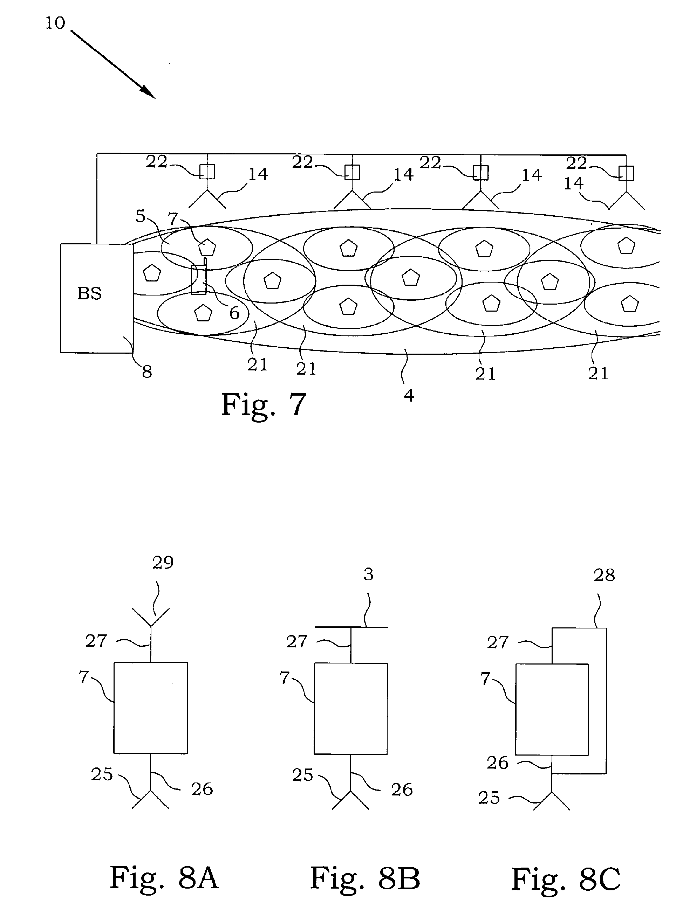

If a very accurate positioning is requested, the number of measurement units has to be high. If the number of measurement units within one single cell becomes too large, the efforts for handling measurements from all measurement units may become large and occupy resources of communication as well as of processing. A particular embodiment of the present invention comprises an initial coarse positioning, on which the orders for the measurement units are based. In Fig. 7, a base station 8 serves a distributed antenna system having a number of distributed antennas 14, together being associated with a cell 4. In connection with the different antennas 14, beacons or any other type of transmitters 22 are provided. Signals emitted from the transmitters 22 can be detected by a mobile terminal 6, and if the signals from the different transmitters 22 are distinguishable, the mobile terminal 6 or any node connected thereto can determine a coarse position of the mobile terminal 6. Each transmitter 22 therefore has an associated area 21. Such downlink signal positioning methods are known as such in prior art and are therefore not further discussed in detail. However, the coarse positioning provides a better position estimation that the simple cell identity.

Once the mobile terminal 6 knows in which associated area 21 it is present, the position determination node 13 can be informed, and a refined position determination can be performed along the earlier described ideas, but with a restricted number of measurement units 7 involved. In Fig. 7, the mobile terminal 6 finds that it is situated in the leftmost associated area 21. The position determination node 13 subsequently restricts the measurements and reporting on which the refined position determination is going to be based to only involve the four measurement units 7 at the left side of Fig. 7. The remaining measurement units 7 in the other parts of the cell 4 can remain inactive, and the amount of signalling is therefore significantly reduced.

As anyone skilled in the art understands, the positioning method according to the present invention can be combined with any other positioning method giving a coarse position. The communications system may e.g. be equipped with a positioning system measuring time-of-flight to different neighbouring base stations. If such a system has access to too few base station signals, an exact position can not be determined. Instead an area can be determined in which the mobile terminal is situated. A refined position determination can then be performed by the ideas of the present invention, having the number of used measurement unit reduced by only including measurement units within or in the vicinity of the determined area.

There are several embodiments of measurement units that could be used in the present invention. Fig. 8A illustrates a block diagram revealing the communication possibilities with the surrounding of a first example of a measurement unit 7 . Here, the measurement unit 7 has a measurement terminal 26 connected to a receiving antenna 25. Uplink signals from the mobile terminal to be position determined are recorded by the antenna and provided to the measurement unit 7 via the measurement terminal 26. The measurement unit 7 of this embodiment has a second reporting terminal 27 being connected to a second antenna 29. This second antenna 29 is utilised for communicating measurement reports and receiving measurement orders. This embodiment is well suited to be used in a system similar to the one illustrated in Fig. 5.

Fig. 8B illustrates an example of a measurement unit 7, which is suitable for use in a system similar to the one illustrated in Fig. 3. Here the reporting terminal 27 is connected to a communication wire system 3.

Fig. 8C illustrates an embodiment of a measurement unit 7, which is suitable for use in a system similar to the one illustrated in Fig. 4. Here the reporting terminal 27 is also connected to the antenna 25 by a connection 28. The antenna can then alternately be used for measuring purposes and for communication with the position determination node. In an alternative embodiment, the connection 28 can be an internal connection. In all embodiments, however, two interfaces are present, one for measuring uplink signal properties, and one for communication with the central position determination node.

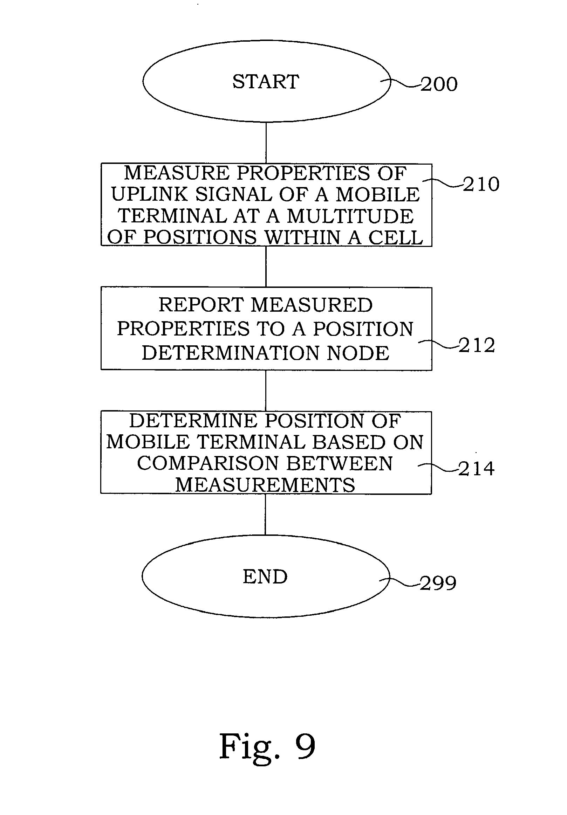

The main steps of an embodiment of a method according to the present invention are illustrated in Fig. 9. The procedure starts in step 200. In step 210, properties of an uplink signal used of a mobile terminal are measured at a multitude of positions within one single cell. The measurements are reported to a position determination node in step 212. This can be performed in any of the earlier described manners, using wired or wireless connections. In step 214, the position of the mobile terminal is determined by comparing the measurements originating at the multitude of measurement positions. In a simple particular embodiment, the position is determined to be within an area associated with the position where the signal with the highest strength was measured. The procedure is ended in step 299.

In a particular embodiment, a further step of compiling measurements into a report is performed at the site of the measurements. Such compiling could e.g. comprise averaging over a certain time, adjusting for rapidly changing signals etc. The measurements or data related thereto can also be stored at the measurement site for later reporting or for comparisons with later measurements.

In another particular embodiment, the results of the measurement are instead reported in a more or less unprocessed condition. Compiling and processing of the measurements could then be included in the position determination step.

The initiation of the measurements can also be performed in different ways. In one particular embodiment, a measurement order is sent to the sites where measurements are to be performed. The order comprises typically an identification of the particular radio resource that should be targeted, e.g. a time slot, a code, a frequency or a combination thereof. Upon reception of such an order, measurements will be performed at that particular radio resource and reported back. If the equipment at the measurement site so admits, several uplink signals could be monitored simultaneously or alternately, to provide more than one simultaneous measurement. In another particular embodiment, the measurements can be performed more or less continuously, also here either simultaneously or alternately. The measurements are stored. When an order of a measurement is received, the latest stored measured value is reported back immediately without any delay for measurements.

In another possible embodiment, the measurement unit makes the measurements, but has not the processor capabilities for evaluating them. Instead, the complete raw measurement result is forwarded to the position determination node, where an evaluation is made. The advantage with such a solution is that the measurement units can be made even simpler. However, the communication links to the position determination node has to handle large amounts of data.

A measurement order in e.g. a GSM or GPRS system comprises information about which time slot measurements should be performed on for a given base station. The base station is defined by a frequency, BSIC or Cell ID. However, a time slot is defined relative a serving base station clock. The base station clocks are normally not synchronised against any other universal time, such as GPS or UTC. The measurement unit therefore in practice has to know the base station clock relative its internal clock. If the measurement unit communicates with the communications network, e.g. by GSM or GPRS, the measurement unit is already synchronised to at least one base station, and the relative synchronisation can thereby easily be arranged. However, if the measurement unit communicates with the position determination node, e.g. by cables or fibres, the measurement unit has to achieve the relative synchronisation in another way. One way to solve this problem is to incorporate a GSM downlink receiver, which measures the base station clocks of interest.

If signal-to-noise ratio is to be measured, the measurement order has to additionally comprise a training sequence or any other data making it possible to identify which training sequence that is going to be used. In GSM, such a training sequence is uniquely defined by the training sequence code.

The measurement orders could be restricted to be valid for only a subset of the measurement positions. Such restrictions could e.g. be based on other coarse positioning methods, thereby reducing the number of measurements needed.

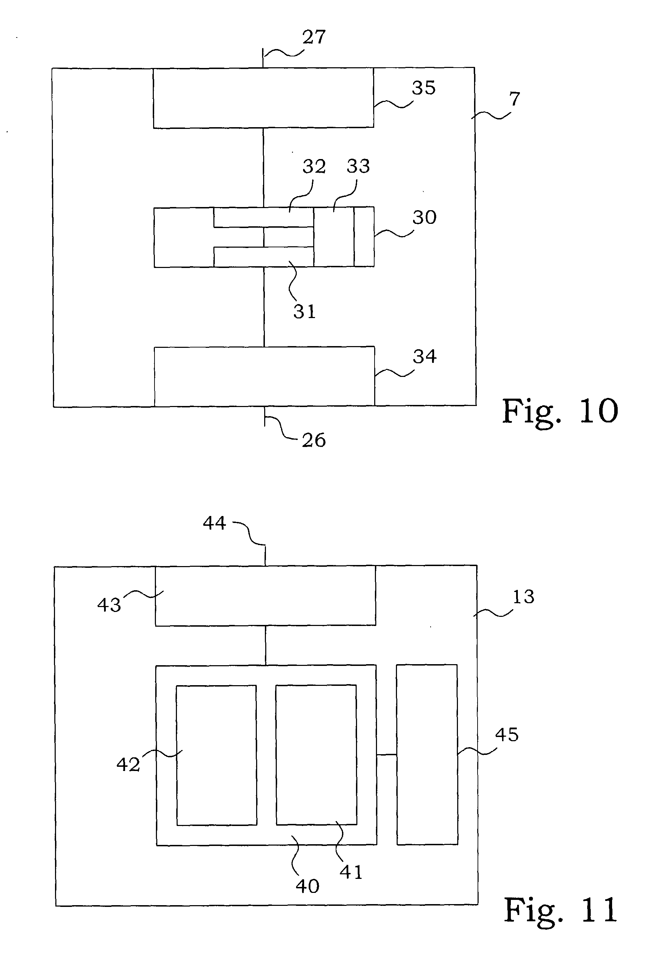

Fig. 10 illustrates a block scheme of a particular embodiment of a measurement unit according to the present invention. The measurement unit 7 comprises a processor 30 connected to a first communication interface 35 and a second communication interface 34. The second communication interface 34 is connected to the measurement terminal 26 and received the actual measured uplink signals. The properties, typically the signal strength, of the uplink signal is evaluated and a measurement report is prepared by an evaluation and report section 31 of the processor. The results are in this particular embodiment also stored in a storage 33. A transmission section 32 of the processor prepares the report for to be sent to the position determination node and provides the report to the first communication interface 35, which is arranged for communication with the position determination node.

A measurement unit 7 according to Fig. 10 can easily be provided on a common mobile telephone platform.

Fig. 11 illustrates a block scheme of a particular embodiment of a position determination node 13 according to the present invention. The position determination node 13 communicates by connection 44 with the measuring units using a communication interface 43. A processor 40 comprises an ordering section 41, which is arranged to issue orders of making measurements on particular radio resources. The orders may be restricted to a particular set of measurement units, as decided based on additional coarse position information. Such information is in this particular embodiment achieved from a coarse positioning unit 45. When measurements are received, a positioning section 42 of the processor 40 evaluates the measurements. The evaluation is typically performed as a comparison between measurements from different sites.

The position determination node 13 is in a typical case arranged in or in connection to a base station controller or a radio network controller. However, the position determination node 13 can also be placed anywhere else in the communications system. The position determination node 13 has to have knowledge about which radio resources that are used for which mobile terminal.

In a particular embodiment, the position determination node 13 may also be separate from the communications system. In such a case, the information about the uplink radio resource used by a particular mobile terminal has to be provided in some way. One possibility is that there is an agreement between the communications system operator and the position determination node operator that such data is provided by the communications system operator.

However, another possibility is that such information is provided by the mobile terminal itself. The knowledge about allocated uplink resources for a specific mobile terminal is available for the communications system, but at allocation also for the mobile terminal in question. It is therefore possible for the mobile terminal to extract such information and communicate it to a position determination node not incorporated in the communications system. Such uplink radio resource data can e.g. be comprised in a data message communicated either to the position determination node or directly to the measuring units. The data message could be transferred e.g. as a SMS message or an electronic mail message.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

## Claims

1. Cellular communications system (10), comprising:
a base station (2; 2A-J) associated with a cell (4);
a position determination node (13); and
a multitude of measuring units (7; 7A-J) distributed within the cell (4);
the multitude of measuring units (7; 7A-J) being in communicational connection with the position determination node (13);
each of the measuring units (7; 7A-J) being arranged to measure properties of signal (11) of uplink radio resource used by a mobile terminal (6) in the cell (4) and to report the measurements to the position determination node (13);
the properties of signal (11) of uplink radio resource being related to signal strength;
the position determination node (13) being arranged to receive the measurement reports and to determine a position of the mobile terminal (6) in the cell (4) based on comparisons between received measurement reports, **characterised in that**
the communicational connection being arranged to utilise the radio interface of the cellular communications system (10) associated with said cell, occupying radio resources that otherwise could be used for ordinary traffic within said cell.

2. Cellular communications system according to claim 1, **characterised in that** the measuring units (7; 7A-G) in turn comprise:
first communication interface (35), for communication with the position determination node (13);
second communication interface (34); and
measurement processor (30), connected to the first and second communication interfaces (34, 35);
the second communication interface (34) being a radio unit arranged to measure properties of signals (11) of uplink radio resources used in the cell (4);
the measurement processor (30) being arranged for preparing measurement reports based on the measure properties;
the measurement processor (30) being further arranged for sending the measurement report to the position determination node (13) via the first communication interface (35).

3. Cellular communications system according to claim 1 or 2, **characterised in that** the position determination node (13) in turn comprise:
third communication interface (43), for communication with the multitude of measuring units (7; 7A-G); and
positioning processor (40), connected to the third communication interface (43);
the positioning processor (40) being arranged for receiving measurement reports from the measuring units via the third communication interface (43);
the positioning processor (40) being further arranged for determination a position of a mobile terminal (6) in the cell (4) based on comparisons between received measurement reports.

4. Cellular communications system according to any of the claims 1 to 3, **characterised in that** the properties being related to absolute signal strength.

5. Cellular communications system according to any of the claims 1 to 3, **characterised in that** the properties being related to a comparison between signal and noise.

6. Cellular communications system according to any of the claims 1 to 5, **characterised in that** the second communication interface (34) being arranged to measure on a single uplink radio resource at a time.

7. Cellular communications system according to any of the claims 1 to 5, **characterised in that** the second communication interface (34) being arranged to measure on a multiple uplink radio resources at a time.

8. Cellular communications system according to any of the claims 1 to 7, **characterised in that** the positioning processor (40) being arranged for issuing measurement orders, the measurement processor (30), being arranged to receive measurement order from the position determination unit (13), whereby the second communication interface (34) is controlled by the measurement processor (30) to measure on uplink radio resources according to the measurement order.

9. Cellular communications system according to claim 8, **characterised in that** the positioning processor (40) is arranged to obtain information about which uplink radio resources are used for which mobile terminals, whereby the measurement order is based on that information.

10. Cellular communications system according to any of the claims 1 to 9, **characterised by** further comprising coarse positioning means connected to the position determination node and arranged to determine a coarse position of the mobile terminal, whereby the positioning processor (40) being arranged for issuing measurement orders to selected ones of the multitude of measuring units (7; 7A-G), based on the results of the coarse positioning means.

11. Cellular communications system according to any of the claims 1 to 10, **characterised in that** the position determination node (13) being associated to or included in the base station (2; 2A-G) or a base station controller/radio network controller (8) controlling the base station (2; 2A-G).

12. Cellular communications system according to any of the claims 1 to 11, **characterised in that** the communication between the measurement units and the position determination node being performed according to at least one of:
GPRS;
UMTS;
Bluetooth; and
Wireless LAN.

13. Cellular communications system according to any of the claims 1 to 12, **characterised in that** cellular communications system is operated according to at least one of:
GSM;
CDMA;
WCDMA;
TDD
TDMA; and
PDC.

14. Measuring unit (7; 7A-G) in a cellular communications system (10), comprising:
first communication interface (35), for communication with a position determination node (13) of the cellular communications system (10);
second communication interface (34); and
measurement processor (30), connected to the first and second communication interfaces (34, 35);
the second communication interface (34) being a radio unit arranged to measure properties of signals (11) of uplink radio resources used in a cell (4) of the cellular communications system (10) in which the measuring unit (7; 7A-G) is situated;
the properties of signal (11) of uplink radio resource being related to signal strength;
the measurement processor (30) being arranged for preparing measurement reports based on the measure properties;
the measurement processor (30) being further arranged for sending the measurement report to the position determination node (13) via the first communication interface (35);
the first communication interface (35) being arranged to utilise the radio interface of the cellular communications system (10) associated with said cell, occupying radio resources that otherwise could be used for ordinary traffic within said cell.

15. Measuring unit according to claim 14, **characterised in that** the properties being related to absolute signal strength.

16. Measuring unit according to claim 14, **characterised in that** the properties being related to a comparison between signal and noise.

17. Measuring unit according to any of the claims 14 to 16, **characterised in that** the second communication interface (34) being arranged to measure on a single uplink radio resource at a time.

18. Measuring unit according to any of the claims 14 to 16, **characterised in that** the second communication interface (34) being arranged to measure on a multiple uplink radio resources at a time.

19. Measuring unit according to any of the claims 14 to 18, **characterised in that** the measurement processor (30) being arranged to receive measurement order from the position determination unit (13), whereby the second communication interface (34) is controlled by the measurement processor (30) to measure on uplink radio resources according to the measurement order.

20. Measuring unit according to any of the claims 14 to 19, **characterised in that** the communication interface (35) is arranged for communication performed according to at least one of:
GPRS;
UMTS;
Bluetooth; and
Wireless LAN.

21. Measuring unit according to any of the claims 14 to 20, **characterised in that** the uplink (11) signal is a signal of at least one of:
GSM system;
CDMA system;
WCDMA system;
TDD system
TDMA system; and
PDC system.

22. Method for determination of a position of a mobile terminal (6) in a cellular communications system (10), comprising the steps of:
measuring, at a multitude of positions, properties of signals (11) of uplink radio resources used by the mobile terminal (6);
the properties of signal (11) of uplink radio resource being related to signal strength;
the multitude of positions being distributed within a cell (4) of the cellular communications system (10);
reporting the measured properties to a position determination node (13); and
determining a position of the mobile terminal (6) based on comparisons between received measurement reports associated with different positions, **characterised in that**;
said step of reporting is performed utilising a radio interface of the cellular communications system (10) associated with said cell, occupying radio resources that otherwise could be used for ordinary traffic within said cell.

23. Method according to claim 22, **characterised by** further comprising the step of:
issuing a measurement order from the position determination node (13), according to which the step of measuring is to be performed.

24. Method according to claim 23, **characterised in that** the measurement order comprises information about which uplink radio resources are to be measured on.

25. Method according to claim 23 or 24, **characterised by** further comprising the steps of:
performing a coarse position determination; and
selecting a set of positions of the multitude of positions based on the result of the coarse position determination,
whereby the step of issuing a measurement order is restricted to concern the selected set of positions.

## Patentansprüche

1. Zellulares Kommunikationssystem (10), Folgendes umfassend:
eine Basisstation (2; 2A-J), mit einer Zelle (4) assoziiert;
einen Positionsbestimmungsknoten (13); und
eine Vielzahl von Messeinheiten (7; 7A-J), die innerhalb der Zelle (4) verteilt sind;
wobei die Vielzahl von Messeinheiten (7; 7A-J) in Kommunikationsverbindung mit dem Positionsbestimmungsknoten (13) sind;
wobei jede der Messeinheiten (7; 7A-J) dazu angeordnet ist, Eigenschaften eines Signals (11) der Uplink-Funkressource zu messen, die von einem mobilen Endgerät (6) in der Zelle (4) verwendet wird, und die Messungen dem Positionsbestimmungsknoten (13) zu melden;
wobei die Eigenschaften eines Signals (11) der Uplink-Funkressource mit Signalstärke in Beziehung stehen;
wobei der Positionsbestimmungsknoten (13) dazu angeordnet ist, die Messmeldungen zu empfangen und eine Position des mobilen Endgeräts (6) in der Zelle (4) auf der Basis von Vergleichen zwischen empfangenen Messmeldungen zu bestimmen, **dadurch gekennzeichnet, dass**
die Kommunikationsverbindung dazu angeordnet ist, die Funkschnittstelle des zellularen Kommunikationssystems (10) zu nutzen, die mit der Zelle assoziiert ist, wobei Funkressourcen besetzt werden, die sonst für gewöhnlichen Verkehr innerhalb der Zelle verwendet werden könnten.

2. Zellulares Kommunikationssystem nach Anspruch 1, **dadurch gekennzeichnet, dass** die Messeinheiten (7; 7A-G) ihrerseits umfassen:
eine erste Kommunikationsschnittstelle (35) zur Kommunikation mit dem Positionsbestimmungsknoten (13);
eine zweite Kommunikationsschnittstelle (34); und
einen Messprozessor (30), der an die ersten und zweiten Kommunikationsschnittstellen (34, 35) angeschlossen ist;
wobei die zweite Kommunikationsschnittstelle (34) eine Funkeinheit ist, dazu angeordnet, Eigenschaften von Signalen (11) der Uplink-Funkressourcen zu messen, die in der Zelle (4) verwendet werden;
wobei der Messprozessor (30) dazu angeordnet ist, Messmeldungen auf der Basis der Messeigenschaften anzufertigen;
wobei der Messprozessor (30) außerdem dazu angeordnet ist, die Messmeldung über die erste Kommunikationsschnittstelle (35) an den Positionsbestimmungsknoten (13) zu senden.

3. Zellulares Kommunikationssystem nach Anspruch 1 oder 2, **dadurch gekennzeichnet, dass** der Positionsbestimmungsknoten (13) seinerseits umfasst:
eine dritte Kommunikationsschnittstelle (43) zum Kommunizieren mit der Vielzahl von Messeinheiten (7; 7A-G); und
einen Positionierprozessor (40), der an die dritte Kommunikationsschnittstelle (43) angeschlossen ist;
wobei der Positionierprozessor (40) dazu angeordnet ist, Messmeldungen von den Messeinheiten über die dritte Kommunikationsschnittstelle (43) zu empfangen;
wobei der Positionierprozessor (40) außerdem zur Bestimmung einer Position eines mobilen Endgeräts (6) in der Zelle (4) auf der Basis von Vergleichen zwischen empfangenen Messmeldungen angeordnet ist.

4. Zellulares Kommunikationssystem nach einem der Ansprüche 1 bis 3, **dadurch gekennzeichnet, dass** die Eigenschaften zur absoluten Signalstärke in Beziehung stehen.

5. Zellulares Kommunikationssystem nach einem der Ansprüche 1 bis 3, **dadurch gekennzeichnet, dass** die Eigenschaften zu einem Vergleich zwischen Signal und Rauschen in Beziehung stehen.

6. Zellulares Kommunikationssystem nach einem der Ansprüche 1 bis 5, **dadurch gekennzeichnet, dass** die zweite Kommunikationsschnittstelle (34) dazu angeordnet ist, jeweils auf einem einzelnen Uplink die Funkressource zu messen.

7. Zellulares Kommunikationssystem nach einem der Ansprüche 1 bis 5, **dadurch gekennzeichnet, dass** die zweite Kommunikationsschnittstelle (34) dazu angeordnet ist, jeweils auf einem mehrfachen Uplink die Funkressourcen zu messen.

8. Zellulares Kommunikationssystem nach einem der Ansprüche 1 bis 7, **dadurch gekennzeichnet, dass** der Positionierprozessor (40) zum Ausgeben von Messbefehlen angeordnet ist, wobei der Messprozessor (30) dazu angeordnet ist, einen Messbefehl von der Positionsbestimmungseinheit (13) zu empfangen, wodurch die zweite Kommunikationsschnittstelle (34) durch den Messprozessor (30) gesteuert wird, auf dem Uplink Funkressourcen gemäß dem Messbefehl zu messen.

9. Zellulares Kommunikationssystem nach Anspruch 8, **dadurch gekennzeichnet, dass** der Positionierprozessor (40) dazu angeordnet ist, Information darüber zu erhalten, welche Uplink-Funkressourcen für welche mobilen Endgeräte verwendet werden, wodurch der Messbefehl auf dieser Information basiert.

10. Zellulares Kommunikationssystem nach einem der Ansprüche 1 bis 9, **dadurch gekennzeichnet, dass** es außerdem ein grobes Positioniermittel umfasst, das an den Positionsbestimmungsknoten angeschlossen ist und dazu angeordnet ist, eine grobe Position des mobilen Endgeräts zu bestimmen, wodurch der Positionierprozessor (40) zum Ausgeben von Messbefehlen an ausgewählte der Vielzahl von Messeinheiten (7; 7AG) angeordnet ist, auf den Ergebnissen des groben Positioniermittels basierend.

11. Zellulares Kommunikationssystem nach einem der Ansprüche 1 bis 10, **dadurch gekennzeichnet, dass** der Positionsbestimmungsknoten (13) mit der Basisstation (2; 2AG) assoziiert ist oder in ihr eingeschlossen ist oder eine Basisstationssteuerung/Funknetzsteuerung (8) die Basisstation (2; 2A-G) steuert.

12. Zellulares Kommunikationssystem nach einem der Ansprüche 1 bis 11, **dadurch gekennzeichnet, dass** die Kommunikation zwischen den Messeinheiten und dem Positionsbestimmungsknoten gemäß mindestens einem von Folgenden ausgeführt wird:
GPRS;
UMTS;
Bluetooth; und
drahtlosem LAN.

13. Zellulares Kommunikationssystem nach einem der Ansprüche 1 bis 12, **dadurch gekennzeichnet, dass** das zellulare Kommunikationssystem gemäß mindestens einem von Folgenden betrieben wird:
GSM;
CDMA;
WCDMA;
TDD;
TDMA; und
PDC.

14. Messeinheit (7; 7A-G) in einem zellularen Kommunikationssystem (10), Folgendes umfassend:
eine erste Kommunikationsschnittstelle (35) zur Kommunikation mit einem Positionsbestimmungsknoten (13) des zellularen Kommunikationssystems (10);
eine zweite Kommunikationsschnittstelle (34); und
einen Messprozessor (30), der an die ersten und zweiten Kommunikationsschnittstellen (34, 35) angeschlossen ist;
wobei die zweite Kommunikationsschnittstelle (34) eine Funkeinheit ist, dazu angeordnet, Eigenschaften von Signalen (11) von Uplink-Funkressourcen zu messen, die in einer Zelle (4) des zellularen Kommunikationssystems (10) verwendet werden, worin die Messeinheit (7; 7A-G) angeordnet ist;
wobei die Eigenschaften des Signals (11) der Uplink-Funkressource zur Signalstärke in Beziehung stehen:
wobei der Messprozessor (30) dazu angeordnet ist, Messmeldungen auf der Basis der Messeigenschaften anzufertigen;
wobei der Messprozessor (30) außerdem dazu angeordnet ist, die Messmeldung über die erste Kommunikationsschnittstelle (35) an den Positionsbestimmungsknoten (13) zu senden;
wobei die erste Kommunikationsschnittstelle (35) dazu angeordnet ist, die Funkschnittstelle des mit der Zelle assoziierten zellularen Kommunikationssystems (10) zu nutzen, wobei Funkressourcen besetzt werden, die sonst für gewöhnlichen Verkehr innerhalb der Zelle verwendet werden könnten.

15. Messeinheit nach Anspruch 14, **dadurch gekennzeichnet, dass** die Eigenschaften zu absoluter Signalstärke in Beziehung stehen.

16. Messeinheit nach Anspruch 14, **dadurch gekennzeichnet, dass** die Eigenschaften zu einem Vergleich zwischen Signal und Rauschen in Beziehung stehen.

17. Messeinheit nach einem der Ansprüche 14 bis 16, **dadurch gekennzeichnet, dass** die zweite Kommunikationsschnittstelle (34) dazu angeordnet ist, jeweils auf einem einzelnen Uplink die Funkressource zu messen.

18. Messeinheit nach einem der Ansprüche 14 bis 16, **dadurch gekennzeichnet, dass** die zweite Kommunikationsschnittstelle (34) dazu angeordnet ist, jeweils auf einem mehrfachen Uplink die Funkressourcen zu messen.

19. Messeinheit nach einem der Ansprüche 14 bis 18, **dadurch gekennzeichnet, dass** der Messprozessor (30) dazu angeordnet ist, einen Messbefehl von der Positionsbestimmungseinheit (13) zu empfangen, wodurch die zweite Kommunikationsschnittstelle (34) durch den Messprozessor (30) gesteuert wird, auf dem Uplink Funkressourcen gemäß dem Messbefehl zu messen.

20. Messeinheit nach einem der Ansprüche 14 bis 19, **dadurch gekennzeichnet, dass** die Kommunikationsschnittstelle (35) für Kommunikation angeordnet ist, die gemäß mindestens einem von Folgenden ausgeführt wird:
GPRS;
UMTS;
Bluetooth; und
drahtlosem LAN.

21. Messeinheit nach einem der Ansprüche 14 bis 20, **dadurch gekennzeichnet, dass** das Uplink-Signal (11) ein Signal von mindestens einem von Folgenden ist:
GSM-System;
CDMA-System;
WCDMA-System;
TDD-System;
TDMA-System; und
PDC-System.

22. Verfahren zum Bestimmen einer Position eines mobilen Endgeräts (6) in einem zellularen Kommunikationssystem (10), die folgenden Schritte umfassend:
an einer Vielzahl von Positionen Eigenschaften von Signalen (11) von Uplink-Funkressourcen messen, die vom mobilen Endgerät (6) verwendet werden;
wobei die Eigenschaften des Signals (11) der Uplink-Funkressource zur Signalstärke in Beziehung stehen;
wobei die Vielzahl von Positionen innerhalb einer Zelle (4) des zellularen Kommunikationssystems (10) verteilt sind;
Meldung der gemessenen Eigenschaften an einen Positionsbestimmungsknoten (13); und
Bestimmen einer Position des mobilen Endgeräts (6) auf der Basis von Vergleichen zwischen empfangenen Messmeldungen, die mit verschiedenen Positionen assoziiert sind,
**dadurch gekennzeichnet, dass**:
der Schritt des Meldens unter Nutzung einer Funkschnittstelle des zellularen Kommunikationssystems (10) ausgeführt wird, die mit der Zelle assoziiert ist, wobei Funkressourcen besetzt werden, die sonst für gewöhnlichen Verkehr innerhalb der Zelle verwendet werden könnten.

23. Verfahren nach Anspruch 22, **dadurch gekennzeichnet, dass** es außerdem den folgenden Schritt umfasst:
Ausgeben eines Messbefehls vom Positionsbestimmungsknoten (13), gemäß dem der Schritt des Messens auszuführen ist.

24. Verfahren nach Anspruch 23, **dadurch gekennzeichnet, dass** der Messbefehl Information darüber umfasst, auf welchem Uplink Funkressourcen zu messen sind.

25. Verfahren nach Anspruch 23 oder 24, **dadurch gekennzeichnet, dass** es außerdem die folgenden Schritte umfasst:
Ausführen einer groben Positionsbestimmung; und
Auswählen einer Menge von Positionen der Vielzahl von Positionen auf der Basis des Ergebnisses der groben Positionsbestimmung,
wodurch der Schritt des Ausgebens eines Messbefehls darauf beschränkt ist, die ausgewählte Menge von Positionen zu betreffen.

## Revendications

1. Système de communication cellulaire (10), comprenant :
une station de base (2 ; 2A - J) associée à une cellule (4) ;
un noeud de détermination de position (13) ; et
une multitude d'unités de mesure (7 ; 7A-J) réparties à l'intérieur de la cellule (4) ;
la multitude d'unités de mesure (7 ; 7A-J) étant en connexion de communication avec le noeud de détermination de position (13) ;
chacune des unités de mesure (7 ; 7A - J) étant agencée de manière à mesurer des propriétés de signal (11) d'une ressource radio en liaison montante utilisée par un terminal mobile (6) dans la cellule (4), et à signaler les mesures au noeud de détermination de position (13) ;
les propriétés du signal (11) de la ressource radio en liaison montante étant connexes à l'intensité du signal ;
le noeud de détermination de position (13) étant agencé de manière à recevoir les rapports de mesure, et à déterminer une position du terminal mobile (6) dans la cellule (4), sur la base de comparaisons entre les rapports de mesure reçus ;
**caractérisé en ce que** :
la connexion de communication est agencée de manière à utiliser l'interface radio du système de communication cellulaire (10) associée à ladite cellule, occupant des ressources radio qui pourraient sinon être utilisées pour du trafic ordinaire au sein de ladite cellule.

2. Système de communication cellulaire selon la revendication 1, **caractérisé en ce que** les unités de mesure (7 ; 7A - G) comprennent à leur tour :
une première interface de communication (35), pour la communication avec le noeud de détermination de position (13) ;
une deuxième interface de communication (34) ; et
un processeur de mesure (30), connecté aux première et deuxième interfaces de communication (34, 35) ;
la deuxième interface de communication (34) étant une unité radio agencée de manière à mesurer des propriétés de signaux (11) de ressources radio en liaison montante utilisées au sein de la cellule (4) ;
le processeur de mesure (30) étant agencé de manière à préparer des rapports de mesure sur la base des propriétés de mesure ;
le processeur de mesure (30) étant en outre agencé de manière à envoyer le rapport de mesure au noeud de détermination de position (13), par l'intermédiaire de la première interface de communication (35).

3. Système de communication cellulaire selon la revendication 1 ou 2, **caractérisé en ce que** le noeud de détermination de position (13) comprend à son tour :
une troisième interface de communication (43), pour la communication avec la multitude d'unités de mesure (7 ; 7A - G) ; et
un processeur de positionnement (40), connecté à la troisième interface de communication (43) ;
le processeur de positionnement (40) étant agencé de manière à recevoir des rapports de mesure en provenance des unités de mesure, par l'intermédiaire de la troisième interface de communication (43) ;
le processeur de positionnement (40) étant en outre agencé de manière à déterminer une position d'un terminal mobile (6) dans la cellule (4) sur la base de comparaisons entre les rapports de mesure reçus.

4. Système de communication cellulaire selon l'une quelconque des revendications 1 à 3, **caractérisé en ce que** les propriétés sont connexes à une intensité de signal absolue.

5. Système de communication cellulaire selon l'une quelconque des revendications 1 à 3, **caractérisé en ce que** les propriétés sont connexes à une comparaison entre le signal et le bruit.

6. Système de communication cellulaire selon l'une quelconque des revendications 1 à 5, **caractérisé en ce que** la deuxième interface de communication (34) est agencée de manière à effectuer des mesures sur une unique ressource radio en liaison montante à la fois.

7. Système de communication cellulaire selon l'une quelconque des revendications 1 à 5, **caractérisé en ce que** la deuxième interface de communication (34) est agencée de manière à effectuer des mesures sur de multiples ressources radio en liaison montante à la fois.

8. Système de communication cellulaire selon l'une quelconque des revendications 1 à 7, **caractérisé en ce que** le processeur de positionnement (40) est agencé de manière à émettre des ordres de mesure, le processeur de mesure (30) étant agencé de manière à recevoir un ordre de mesure en provenance de l'unité de détermination de position (13), moyennant quoi la deuxième interface de communication (34) est commandée par le processeur de mesure (30) en vue d'effectuer des mesures sur des ressources radio en liaison montante selon l'ordre de mesure.

9. Système de communication cellulaire selon la revendication 8, **caractérisé en ce que** le processeur de positionnement (40) est agencé de manière à obtenir des informations indiquant quelles ressources radio en liaison montante sont utilisées et pour quels terminaux mobiles, moyennant quoi l'ordre de mesure est basé sur ces informations.

10. Système de communication cellulaire selon l'une quelconque des revendications 1 à 9, **caractérisé en ce qu'**il comprend en outre un moyen de positionnement grossier connecté au noeud de détermination de position et agencé de manière à déterminer une position grossière du terminal mobile, moyennant quoi le processeur de positionnement (40) est agencé de manière à émettre des ordres de mesure vers des unités de mesure sélectionnées parmi la multitude d'unités de mesure (7 ; 7A - G), sur la base des résultats du moyen de positionnement grossier.

11. Système de communication cellulaire selon l'une quelconque des revendications 1 à 10, **caractérisé en ce que** le noeud de détermination de position (13) est associé à ou inclus dans la station de base (2 ; 2A - G) ou un contrôleur de station de base / un contrôleur de réseau radio (8) commandant la station de base (2 ; 2A - G).

12. Système de communication cellulaire selon l'une quelconque des revendications 1 à 11, **caractérisé en ce que** la communication entre les unités de mesure et le noeud de détermination de position est mise en oeuvre selon au moins l'un des éléments ci-dessous :
un service GPRS ;
un système UMTS ;
la technologie Bluetooth ; et
un réseau LAN sans fil.

13. Système de communication cellulaire selon l'une quelconque des revendications 1 à 12, **caractérisé en ce que** le système de communication cellulaire est exploité selon au moins l'un des systèmes ci-dessous :
un système GSM ;
un système d'accès CDMA ;
un système d'accès WCDMA ;
un système de duplexage TDD ;
un système d'accès TDMA ; et
un système PDC.

14. Unité de mesure (7 ; 7A - G) dans un système de communication cellulaire (10), comprenant :
une première interface de communication (35), pour la communication avec un noeud de détermination de position (13) du système de communication cellulaire (10) ;
une deuxième interface de communication (34) ; et
un processeur de mesure (30), connecté aux première et deuxième interfaces de communication (34, 35) ;
la deuxième interface de communication (34) étant une unité radio agencée de manière à mesurer des propriétés de signaux (11) de ressources radio en liaison montante utilisées au sein d'une cellule (4) du système de communication cellulaire (10) dans laquelle est située l'unité de mesure (7 ; 7A - G) ;
les propriétés du signal (11) de la ressource radio en liaison montante étant connexes à l'intensité du signal ;
le processeur de mesure (30) étant agencé de manière à préparer des rapports de mesure sur la base des propriétés de mesure ;
le processeur de mesure (30) étant en outre agencé de manière à envoyer le rapport de mesure au noeud de détermination de position (13), par l'intermédiaire de la première interface de communication (35) ;
la première interface de communication (35) étant agencée de manière à utiliser l'interface radio du système de communication cellulaire (10) associée à ladite cellule, occupant des ressources radio qui pourraient sinon être utilisées pour du trafic ordinaire au sein de ladite cellule.

15. Unité de mesure selon la revendication 14, **caractérisée en ce que** les propriétés sont connexes à une intensité de signal absolue.

16. Unité de mesure selon la revendication 14, **caractérisée en ce que** les propriétés sont connexes à une comparaison entre le signal et le bruit.

17. Unité de mesure selon l'une quelconque des revendications 14 à 16, **caractérisée en ce que** la deuxième interface de communication (34) est agencée de manière à effectuer des mesures sur une unique ressource radio en liaison montante à la fois.

18. Unité de mesure selon l'une quelconque des revendications 14 à 16, **caractérisée en ce que** la deuxième interface de communication (34) est agencée de manière à effectuer des mesures sur de multiples ressources radio en liaison montante à la fois.

19. Unité de mesure selon l'une quelconque des revendications 14 à 18, **caractérisée en ce que** le processeur de mesure (30) est agencé de manière à recevoir un ordre de mesure en provenance de l'unité de détermination de position (13), moyennant quoi la deuxième interface de communication (34) est commandée par le processeur de mesure (30) en vue d'effectuer des mesures sur des ressources radio en liaison montante selon l'ordre de mesure.

20. Unité de mesure selon l'une quelconque des revendications 14 à 19, **caractérisée en ce que** l'interface de communication (35) est agencée pour une communication mise en oeuvre selon au moins l'un des éléments ci-dessous :
un service GPRS ;
un système UMTS ;
la technologie Bluetooth ; et
un réseau LAN sans fil.

21. Unité de mesure selon l'une quelconque des revendications 14 à 20, **caractérisée en ce que** le signal de liaison montante (11) est un signal d'au moins l'un des systèmes ci-dessous :
un système GSM ;
un système d'accès CDMA ;
un système d'accès WCDMA ;
un système de duplexage TDD ;
un système d'accès TDMA ; et
un système PDC.

22. Procédé de détermination d'une position d'un terminal mobile (6) dans un système de communication cellulaire (10), comprenant les étapes ci-dessous consistant à :
mesurer, au niveau d'une multitude de positions, des propriétés de signaux (11) de ressources radio en liaison montante utilisées par le terminal mobile (6) ;
les propriétés de signal (11) de ressource radio en liaison montante étant connexe à l'intensité du signal ;
la multitude de positions étant répartie à l'intérieur d'une cellule (4) du système de communication cellulaire (10) ;
signaler les propriétés mesurées à un noeud de détermination de position (13) ; et
déterminer une position du terminal mobile (6) sur la base de comparaisons entre les rapports de mesure reçus associés à différentes positions ;
**caractérisé en ce que** :
ladite étape de signalement est mise en oeuvre en utilisant une interface radio du système de communication cellulaire (10) associée à ladite cellule, occupant des ressources radio qui pourraient sinon être utilisées pour du trafic ordinaire au sein de ladite cellule.

23. Procédé selon la revendication 22, **caractérisé en ce qu'**il comprend en outre l'étape ci-dessous consistant à :
émettre un ordre de mesure à partir du noeud de détermination de position (13), selon lequel l'étape de mesure doit être mise en oeuvre.

24. Procédé selon la revendication 23, **caractérisé en ce que** l'ordre de mesure comprend des informations indiquant sur quelles ressources radio en liaison montante les mesures doivent être mises en oeuvre.

25. Procédé selon la revendication 23 ou 24, **caractérisé en ce qu'**il comprend en outre les étapes ci-dessous consistant à :
mettre en oeuvre une détermination de position grossière ; et
sélectionner un ensemble de positions de la multitude de positions sur la base du résultat de la détermination de position grossière ;
moyennant quoi l'étape d'émission d'un ordre de mesure est limitée en vue de ne concerner que l'ensemble de positions sélectionné.
